Europäisches Patentamt

European Patent Office

Office européen des brevets

(11) Numéro de publication: **0 432 833 A1**

## (12) DEMANDE DE BREVET EUROPEEN

(21) Numéro de dépôt: 90203195.4

(22) Date de dépôt: 04.12.90

(51) Int. Cl.5 **C03B 7/16,** G05B 19/04, G05B 19/35

(30) Priorité: 15.12.89 IT 8569489

(43) Date de publication de la demande:
19.06.91 Bulletin 91/25

(84) Etats contractants désignés:
AT BE CH DE DK ES FR GB GR IT LI LU NL SE

(71) Demandeur: BDF-BOSCATO & DALLA
FONTANA s.p.a.
Via Ponte Alto, 51
I-36100 Vicenza(IT)

(72) Inventeur: **Sasso, Daniele, Ing.**
**Via Peschiera 37**
**Vicenza(IT)**
Inventeur: **Bellina, Claudio, Ing.**
**Via Curti 32**
**Rettorgole Vicenza(IT)**

(74) Mandataire: **Bettello, Luigi, Dott. Ing. et al**
**Via Col d'Echele, 25**
**I-36100 Vicenza(IT)**

(54) Distributeur de gouttes de verre fondu dans les machines pour la réalisation d'objets creux en verre.

(57) Le distributeur (6, 7) est actionné automatiquement à l'aide d'un moteur (8) à courant continu du type dit "brushless", contrôlé par le programme d'un micro-processeur prévu sur un tableau de contrôle approprié, avec la possibilité de modifier électroniquement l'ordre des opérations et d'effectuer de petites corrections sur les limites de celles-ci.

FIG. 1

La présente invention a pour but de réaliser un distributeur ou collecteur de gouttes du type tournant commandé par un moteur à servo-contrôle, qui permette de distribuer les gouttes de verre fondu aux différents postes d'une machine pour la réalisation d'articles creux en verre, cette distribution étant opérée mécaniquement à l'aide d'un ou de plusieurs écrans de déviation.

L'invention constitue un perfectionnement aux brevets italiens antérieurs N° 905 825 et 1 046 540 au nom de la même Demanderesse.

Le premier de ces brevets a proposé de réaliser un distributeur de gouttes tournant, équipé d'une commande par cames qui permet de distribuer les gouttes de verre fondu à chacun des postes individuels des machines pour la formation d'articles en verre, et ce au moyen d'un écran oscillant unique animé d'un mouvement de rotation autour d'un axe.

Dans le second brevet, il est prévu une came double associée à deux leviers en équerre qui commandent un bras denté propre à faire tourner les axes qui portent les écrans collecteurs, lesquels sont ainsi en mesure d'être amenés aux positions désirées pour la distribution des gouttes de verre fondu aux postes individuels des machines de réalisation.

Comme on le sait, une machine pour la formation d'objets creux en verre comprend généralement un ou plusieurs postes de travail identiques, disposés côte-à-côte, chacun destits postes recevant séparemment, à des intervalles de temps réguliers, une dose de verre fondu provenant d'un dispositif d'alimentation agencé pour former les gouttes de manière ré-pétitive. Ces gouttes sont ensuite déviées en direction des différents postes de travail de la machine par le moyen d'un distributeur de gouttes qui comprend de un à quatre écrans de déviation, en fonction du procédé utilisé ; chacun de ces écrans devie les gouttes d'alimentation jusqu'au poste prévu pour l'opération.

Dans les machines comportant plusieurs postes de travail, les gouttes doivent être distribuées de manière séquentielle aux différents postes, suivant un ordre opérationnel précis défini par le nombre des postes, puisque le programme de la machine implique une rotation dans le sens dextrogyre ou dans le sens sinistrogyre et que les espacements de temps varient en fonction de la cadence désirée pour les articles finis qui sont ensuite évacués par un tapis transporteur prévu sur le devant de la machine.

Dans la forme de réalisation la plus habituellement utilisée pour ce type de distributeur, il est prévu un ensemble d'écrans de déviation animés d'un mouvement oscillant de rotation autour d'un axe, ce mouvement étant obtenu à l'aide d'une commande par came mécanique qui permet de réaliser les positionnements désirés.

La limite pratique de ces dispositifs collecteurs ou distributeurs de gouttes à actionnement par came mécanique est due à la vitesse maximale susceptible d'être atteinte et à la flexibilité intrinsèque relative de l'ensemble.

Avec l'augmentation du nombre des postes de travail prévus dans les machines de réalisation, nombre qui peut atteindre parfois douze, et avec les vitesses élevées de production maintenant obtenues dans les procédés de formage, on a pu constater que la limite dynamique du collecteur à cames à commande mécanique est de 160 opérations à la minute, ce chiffre étant insuffisant pour correspondre aux 200 à 240 opérations à la minute requise à l'heure actuelle dans les machines à haut rendement.

L'asservissement du mouvement de l'écran à un système qui utilise une ou plusieurs cames associées à plusieurs postes équipés de tâteurs à galet, engendre des inconvénients dûs à l'inertie des pièces en mouvement alternatif, cette inertie pouvant provoquer le détachement du galet à partir du profil de la came correspondante et son retour subséquent en direction de celui-ci, avec l'apparition de heurts nuisibles aussi bien pour la mécanique que pour la précision requise par l'opération.

En outre, la nécessité de rendre plus flexible la production de la machine avec la possibilité de réduire le nombre des postes de travail fonctionnant en même temps, rend nécessaire un système plus rapide et plus simple pour la re-programmation de l'ordre des opérations du distributeur ou collecteur de gouttes, ce qui implique, avec un mécanisme à cames mécaniques, le remplacement de ces cames sur le distributeur.

Le but de la présente invention est d'éliminer le dispositif de positionnementmécanique à cames tournantes en prévoyant son remplacement par un moteur servo-contrôlé ayant la fonction de positionneur.

Le distributeur suivant l'invention est défini à la revendication 1. En fait il comprend une tête de positionnement qui porte les arbres porte-écrans, ainsi qu'une transmission mécanique qui permet d'obtenir une rotation de 90° du mécanisme et sa mise hors service en position de repos.

La partie mécanique du distributeur comprend une transmission double à courroie dentée et crémaillère, préférablement à dents inclinées, le tout étant actionné par un moteur à courant continu du type "brushless", c'est-à-dire sans balai.

Avec une disposition de ce type, il est possible d'augmenter la cadence de travail jusqu'à 240 opérations à la minute, comme cela est exigé par les machines à haut rendement. Le distributeur est donc parfaitement adapté à son montage sur des machines automatiques pour la formation d'objets creux en verre, à poste de travail individuel, du type dénomé "Machine IS", la gestion des mouvements de l'ensemble pouvant être assuré à l'aide d'un ordinateur ou d'un terminal portatif de celui-ci.

Les données susceptibles d'être programmées sur le clavier comprennent le nombre de postes disponibles sur la machine, le nombre de postes en fonctionnement, l'ordre des opérations, les limites des opérations pour chaque poste, et les déphasages propres à permettre la synchronisation du distributeur de gouttes et de son dispositif d'alimentation.

Le système de contrôle permet en outre de relever en auto-saisie les limites des opérations des différents postes de travail, limites qui une fois mémorisées seront utilisées au cours du fonctionnement en automatique.

Un contrôle continu de l'erreur de position est effectué par le distributeur à l'aide d'un capteur de position monté sur l'arbre de commande de la crémaillère.

Sur les planches de dessin annexées :
- La fig. 1 est une vue de côté en élévation montrant le distributeur suivant l'invention.
- La fig. 2 montre le même distributeur par l'arrière.
- La fig. 3 est une vue en plan de ce distributeur, représenté à deux positions différentes, à savoir la position de travail et la position de repos.
- La fig. 4 est une coupe longitudinale suivant le plan indiqué en IV-IV en fig. 1.
  La fig. 5 montre le schéma de réglage électronique de l'ensemble.

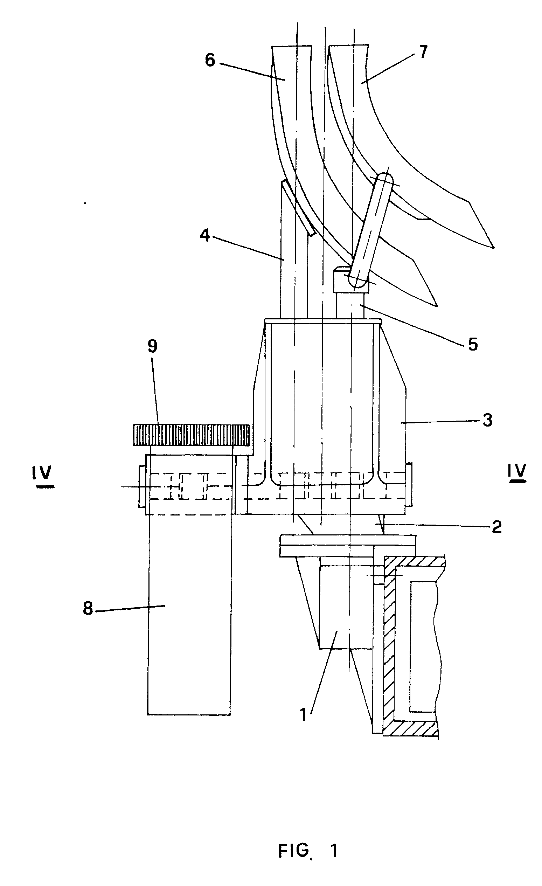

Comme on peut le voir en fig. 1, le distributeur comprend un support 1 pour un bras tournant 2 qui est équipé d'un ensemble 3 sur lequel sont prévus des arbres 4 et 5 portant verticalement des écrans de déviation, respectivement 6 et 7.

Ces derniers présentent un profil en forme de gouttière, en étant destinés à distribuer les gouttes de verre fondu aux différents moules prévus radialement autour du distributeur. Le mouvement de rotation des arbres 4 et 5 est opéré à l'aide d'un moteur à servo-commande 8 du type usuellement appelé "brushless".

A travers une transmission à courroie dentée 9, ce moteur opère le déplacement linéaire d'une crémaillère 10 qui met en rotation les arbres 4 ou 5 soutenant les écrans pour la distribution des gouttes de verre fondu.

Ces écrans peuvent être au nombre de deux, trois ou plus, en fonction des exigences considérées.

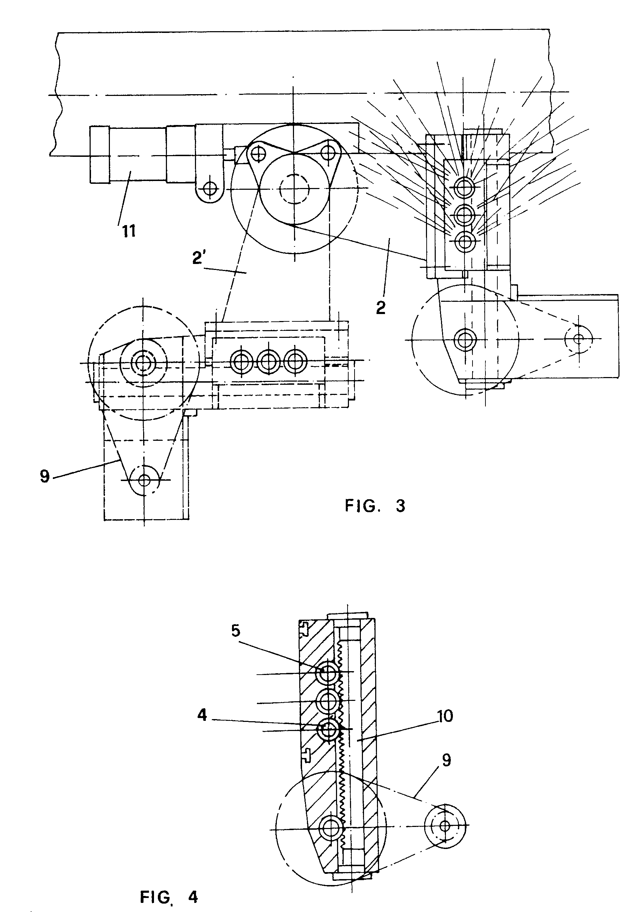

La rotation du bras 2 jusqu'à la position 2', obtenue à l'aide d'un vérin pneumatique 11 (fig. 3), permet d'amener les écrans à la position de repos au niveau de laquelle ils peuvent être soumis aux opérations de nettoyage et de manipulation. La séquence des positionnements des écrans 6 et 7 est obtenue, comme on l'a dit plus haut, au moyen d'un moteur à courant continu du type "brushless", piloté à travers un ensemble d'actionnement contrôlé par un système d'ordinateur.

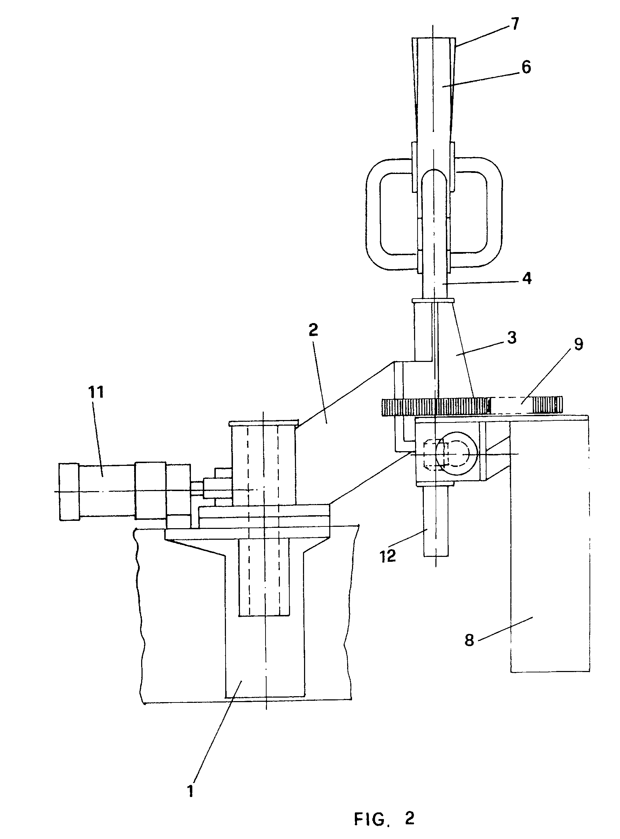

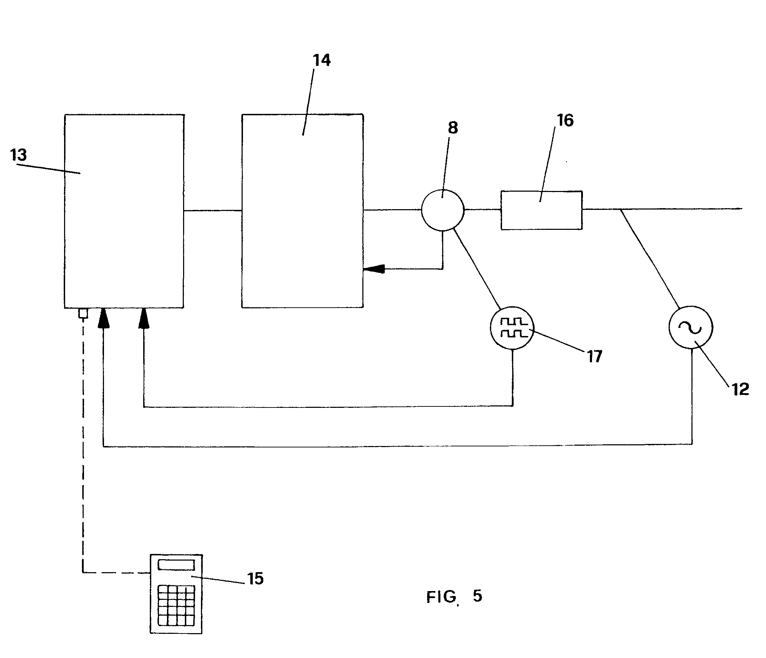

Au cours du programme d'opérations choisi, le positionnement exact est contrôlé par un schéma de réglage 13 qui (cf. fig. 5), par l'intermédiaire d'un capteur de position 12 (fig. 2) monté sur l'arbre de sortie de la poulie, contrôle le dispositif de commande 14 du type micro-processeur, lequel commande à son tour le moteur 8 équipé d'un réducteur 16, tandis que le codeur 17 relie ledit moteur 8 au schéma de réglage 13.

Le contrôle de la position angulaire de l'arbre précité permet le relevé de la position angulaire des écrans 6 et 7.

Avec le système de distribution représenté, on peut obtenir un mouvement alternatif très précis d'oscillation parallèle des écrans, ce mouvement étant strictement lié à l'ensemble de l'appareillage assurant l'envoi programmé des gouttes aux moules de la machine.

Ceci permet également de corriger les limites des opérations relevées et mémorisées en auto-saisie, moyennant recours à un terminal portatif 15 à clavier, de type en soi connu, le tout afin d'obtenir la précision de travail maximale.

Le terminal portatif 15 est en outre utilisé pour la programmation de toutes les données nécessaires au fonctionnement correct de l'ensemble, dans le même but de précision optimale.

## Revendications

1. Distributeur de gouttes de verre fondu équipant les machines pour la réalisation d'objets creux en verre, propre à assurer le positionnement d'un ou plusieurs écrans (6, 7) destinés à dévier les gouttes provenant d'un dispositif supérieur d'alimentation en direction de la canalisation opérant la distribution des gouttes aux moules placés au-dessous, caractérisé en ce qu'il est actionné au moyen d'un moteur à courant continu (8) du type "brushless" qui est contrôlé par le programme d'un ordinateur avec interposition d'une transmission mécanique propre à transmettre le mouvement rotatif à une crémaillère (10) coopérant avec les roues dentées des arbres (4 et 5) qui portent verticalement les écrans.

2. Distributeur suivant la revendication 1, caractérisé en ce qu'un capteur de position angulaire (12) est inséré sur le dispositif pour la transmission du mouvement de la crémaillère (10), qui actionne le déplacement en rotation des arbres (4 et 5) pour la commande des écrans de déviation (6 et 7), afin de corriger de petites erreurs dans les positions de travail desdits écrans.

3. Distributeur suivant les revendications 1 et 2, caractérisé en ce que l'ensemble comprenant le bras (2) qui porte le moteur de commande (8) avec les écrans de déviation (6 et 7) correspondants, peut être déplacé angulairement, de la position de travail à une position de repos, à l'aide d'un vérin pneumatique (11), ceci en vue d'amener ledit ensemble à une position propre à faciliter son nettoyage et sa manipulation.

4. Distributeur suivant les revendications 1 à 3, caractérisé en ce que l'ensemble du mouvement des écrans de déviation est placé sous la dépendance d'un schéma de réglage (13) qui permet l'auto-saisie des positions des opérations par l'intermédiaire du capteur de position (12) avec la possibilité d'effectuer la correction des valeurs lues à l'aide d'un terminal portatif (15).

FIG. 1

FIG. 2

EP 0 432 833 A1

FIG. 3

FIG. 4

7

FIG. 5

**Office européen
des brevets**

**RAPPORT DE RECHERCHE
EUROPEENNE**

Numéro de la demande

**EP 90 20 3195**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 558 149  (MAUL TECHNOLOGY)<br>* En entier * | 1 | C 03 B 7 16<br>G 05 B 19 04<br>G 05 B 19 35 |
| X | US-A-4 599 101  (DOUGLAS)<br>* En entier * | 1-4 | |
| X | US-A-4 357 157  (LUIS CARDENAS-FRANCO)<br>* En entier * | 1-4 | |
| X | EP-A-0 202 116  (EMHART INDUSTRIES)<br>* En entier * | 1-4 | |
| X | US-A-4 723 977  (GRANT)<br>* En entier * | 1-4 | |
| X | EP-A-0 268 414  (EMHART INDUSTRIES)<br>* En entier * | 1-4 | |

| DOMAINES TECHNIQUES RECHERCHES (Int. Cl.5) |
|---|
| C 03 B<br>G 05 B |

Le présent rapport de recherche a été établi pour toutes les revendications

| Lieu de la recherche | Date d'achèvement de la recherche | Examinateur |
|---|---|---|
| La Haye | 28 février 91 | VAN DEN BOSSCHE W.L. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire
T : théorie ou principe à la base de l'invention

E : document de brevet antérieur, mais publié à la
     date de dépôt ou après cette date
D : cité dans la demande
L : cité pour d'autres raisons
&: membre de la même famille, document
     correspondant